# EUROPEAN PATENT SPECIFICATION

(11) **EP 2 960 214 B1**
(45) Date of publication and mention of the grant of the patent: **23.01.2019**
(21) Application number: 12777603.7
(22) Date of filing: 24.04.2012
(51) Int. Cl.: C02F 9/14, C02F 3/12, C02F 1/28, C02F 103/36, B01D 61/14, C02F 103/34

(54) **METHOD FOR ELIMINATING PHARMACEUTICAL PRODUCTS FROM WASTE WATER**
VERFAHREN ZUR ENTFERNUNG VON PHARMAZEUTISCHEN PRODUKTEN AUS ABWASSER
PROCÉDÉ D'ÉLIMINATION DE PRODUITS PHARMACEUTIQUES PRÉSENTS DANS DES EAUX USÉES

(30) Priority: 26.04.2011 ES 201130652
(43) Date of publication of application: 30.12.2015
(73) Proprietor: Universidade de Santiago de Compostela, 15782 Santiago de Compostela (ES)
(72) Inventor: OMIL PRIETO, Francisco, E-15782 Santiago de Compostela (ES); SERRANO PALACIOS, Denisse, E-15782 Santiago de Compostela (ES); SUÁREZ MARTÍNEZ, Sonia, E-15782 Santiago de Compostela (ES); LEMA RODICIO, Juan M., E-15782 Santiago de Compostela (ES)
(74) Representative: Sugrañes Patentes y Marcas
(86) International application number: PCT/ES2012/070274
(87) International publication number: WO 2012/146815

(56) References cited:
- WO-A1-2004/087583
- WO-A1-2007/042789
- WO-A1-2010/147964
- WO-A1-2010/147964
- CN-A- 101 337 706
- JP-A- 62 286 591
- US-A1- 2003 159 988
- US-A1- 2007 209 999
- US-A1- 2007 209 999
- US-A1- 2009 218 299
- TAMBOSI, J. L. ET AL.: 'Removal of pharmaceutical compounds in membrane bioreactors (MBR) applying submerged membranes' DESALINATION vol. 261, no. 1-2, 17 June 2010, pages 148 - 156, XP027144045

## Description

### Technical Field of the Invention

The present invention relates to a process for the removal of contaminating pharmaceutical products present in wastewater in trace concentrations by means of adding powdered activated carbon in a sequential bioreactor coupled to a continuous chamber containing an ultrafiltration membrane.

### State of the Art

Pharmaceutical compounds are a group of organic pollutants with a large number of active ingredients that are consumed on a massive scale in developed societies. These substances are used in the formulation of pharmacological products as well as personal care products (shampoos, body lotions, sunscreens, etc.), therefore covering a wide spectrum concerning the molecular structure, physicochemical properties, biodegradability potential and persistence. Thousands of active ingredients are being used today for synthesizing an even larger number of products. Taking the scope of the EU as an example, more than 3000 different substances are being used in human medicine alone, to which a very significant number of drugs for veterinary use must be added. In terms of the prospects for upcoming years, an increase in medicament consumption is envisaged primarily due to gradual population aging, although it may also be due to the improvement in the quality of life. Legislative regulation of these substances in the environment is imminent, as indicated in the Water Framework Directive (2000/60/EC). In this sense, a list of priority pollutants is updated every four years which already includes several pharmaceutical compounds.

These compounds have been detected in different environmental compartments, such as rivers, lakes, groundwater, sediments, etc. The lack of conclusive information about the potential ecotoxicological impact derived from the presence of such compounds in the environment has turned this subject into a key issue in the water treatment sector. The growing concern is based fundamentally on the fact that such substances have been specifically designed to produce a biological effect in patients to whom the substances are administered, even at very low concentrations.

The pharmaceutical compounds found in the environment come from several sources such as oral consumption, which entails urine and fecal excretion of the non-metabolized fraction of the medicament, or the washing of substances that are applied on the skin (fragrances, lotions, etc.), thus being present in domestic wastewater and reaching the Wastewater Treatment Plant (WWTP). Furthermore, hospitals are characterized by a high consumption of such substances, which means that wastewater from hospitals has a higher load of these compounds than urban wastewater (UW). Besides having very high water consumption, hospitals generally discharge very complex water due to the wide range of compounds used (diagnostic agents such as contrast medium, anesthetics such as alkylphenols, disinfectants such as alcohols, formaldehyde and chlorophenols, drugs, etc.). In a study conducted by this research group from Universidade de Santiago de Compostela, it was found that the hospital effluents have contamination levels that are significantly higher than municipal effluents, with maximum concentrations measured for conventional parameters that tripled the standards set for concentrated municipal wastewater. Concentrations in hospital effluents of up to 40 times those detected in municipal water were measured for some pharmaceutical products (Suárez S. 2008, PhD Dissertation, Universidade de Santiago de Compostela).

With the technology implemented in the more modern WWTPs, an effective removal of carbon and nitrogen present in the UW, in addition to strict microbiological control, is assured. However, these facilities are receiving a large number of organic micro-pollutants, such as pharmaceutical products, for which conventional treatment technologies have not been specifically designed. This leads to an uncontrolled discharge of pharmaceutical products into surface and groundwater bodies with the subsequent impact on the environment.

Pharmaceutical products are eliminated during wastewater treatment by means of a set of mechanisms, such as volatilization, adsorption on sludge and biological and/or chemical transformation. Parameters such as temperature, the use of additives, Solids Retention Time (SRT) and biomass composition, structure and concentration, have shown to significantly influence the efficiency in eliminating these compounds (Omil F et al., 2010, In: Xenobiotics in the Urban Water Cycle, Ed. Springer, pp. 283-306). In summary, operating with high sludge concentrations and long SRTs are favorable for maximizing the removal of pharmaceutical products. WO2004/087583 discloses a method for treating complex chemical and pharmaceutical effluents in a sequential batch reactor, wherein the sequence of various operations is done using preprogrammed timers (claim 9) and wherein total cycle period of operation comprises of 24 hours (HRT) consisting of the following stages: 15 minutes of filling phase (anoxic), 23 hours of reaction (aerobic) phase with recycling, 30 minutes of settling phase (anoxic) and 15 minutes of withdrawal phase (anoxic).

On the other hand, it has been observed that operating under nitrification-denitrification conditions results in the generation of ammonia monooxygenase (AMO) enzyme by specific groups of bacteria improving the removal of some pharmaceutical pollutants, like naproxen, roxithromycin and erythromycin, iopromide and trimethoprim (Suárez et al., 2010, Water Research 44, pp. 3214-3224; Batt et al., 2006, Environ. Sci. Technol. 40, pp. 7367-7373; Perez et al., 2005, Environmental Toxicology and Chemistry 24, pp. 1361-1367) or even with the synthetic hormone ethinylestradiol (Forrez et al., 2008; Journal of Chemical Technology and Biotechnology 84, pp. 119-125).

Membrane bioreactors are based on a combination of a bioreactor with biomass in suspension in which a microfiltration or ultrafiltration membrane is submerged or placed externally. It has the advantage of favoring the operation with high sludge concentrations and long SRTs compared with conventional activated sludge (CAS) systems and of producing high quality effluents in terms of their microbiological characteristics and conventional parameters (fundamentally solids). However, it has been observed that pharmaceutical products are not eliminated through size exclusion in the membrane filtration step, so it remains unclear if such systems can improve the removal of these compounds in trace amounts. This means that such systems favor the removal of biodegradable pharmaceutical products (e.g., ibuprofen) and also of those products having the tendency to be sorbed on the sludge (e.g., galaxolide). However, some compounds that have been found to be highly persistent in CAS systems (e.g. carbamazepine) are not eliminated in membrane bioreactors either (Clara M et al., 2004, Water Research 38, pp. 947-954).

It has been demonstrated that the use of activated carbon in adsorption columns as a tertiary treatment is effective for the removal of pharmaceutical compounds (Choubert JM et al., 2011, Water Science & Technology 63, pp. 57-65). However, the addition of activated carbon directly in wastewater treatment plants for the purpose of eliminating pharmaceutical pollutants is not a known strategy. Nevertheless, there are some works in activated sludge systems in which powdered activated carbon at concentrations of 500 to 4000 mg/L has been used to increase the efficacy of the nitrification step (Ng and Stenstrom, 1987, J. Environ. Eng. 113, pp. 1285-1301), whereas other authors have observed an increase in the removal of organic matter as well as a significant decrease in toxicity caused by inhibitory compounds (Widjaja T. et al., 2004, Chemosphere 57, pp. 1219-1224). Furthermore, it has been observed that activated carbon is a suitable support to which bacteria can adhere, improving the retention of those slow-growing bacteria, such as nitrifying bacteria (Thuy and Visvanathan, 2006, Water Science and Technology 53, pp. 89-97). More recent research has demonstrated that the use of activated carbon can be suitable for minimizing the problems of fouling typically occurring in membrane bioreactors (MBRs). In this sense, concentrations of 0.5 to 3 g/L have been used in the MBR aeration tank to prevent and control membrane fouling (Remy M et al., 2009, Water Research 43, pp. 345-350; Munz G et al., 2007, Desalination 207, pp. 349-360).

In the present invention, the process proposes using a sequential bioreactor operated under nitrification-denitrification conditions in the presence of PAC, coupled to a chamber containing an ultrafiltration membrane which, as a whole, entails a very efficient process for the removal of pharmaceutical compounds. The removal of those compounds that are more biodegradable is favored by operating under nitrification-denitrification conditions, with high biomass concentrations and long SRTs, whereas the presence of PAC allows removal by adsorption of the more persistent trace pollutants (e.g., carbamazepine), and finally, sorption of the more lipophilic substances (e.g., musk fragrances) on the sludge will increase due to the development of agglomerates (flocs) that are smaller than those growing in a CAS due to the presence of the ultrafiltration membrane. Furthermore, since it is a process with membranes, the retention of the PAC and of the sludge, and therefore of the sorbed compounds, is complete.

In this sense, the only patent documents that have been found focus on using activated carbon in membrane bioreactors for the purpose of protecting membranes against blocked pores (JP 1284304 A) or for improving the efficiency of nitrogen and dissolved organic matter removal (KR 20030097075 A).

### Disclosure of the Invention

The present invention relates to a process for the removal of contaminating pharmaceutical products present in wastewater as defined by the appended claims.

The effluent to be treated consists of wastewater which is characterized by the presence of organic matter and nutrients with concentration ranges of 500-2000 mg COD/L, 10-100 mg N-NH₄/L and 1-10 mg P-PO₄/L. The concentrations of pharmaceutical products under consideration are in trace amounts, i.e., below 100 µg/L.

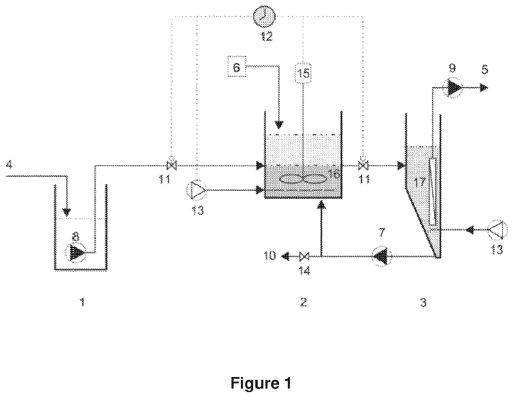

Figure 1 (see "Description of the Drawing" section) depicts the configuration of the process which is formed by two units. The stream of wastewater to be treated is pumped from the receiving tank towards the first unit, the sequential bioreactor. This tank has been designed to work sequentially following a scheduled program of 6-hour cycles regulated with a timer, each of which comprises different phases: filling (3-10%), anoxic operation (20-30%), aerobic operation (60-70%), settling and effluent withdrawal (3-10%). Metabolic reactions (denitrification, oxidation of organic matter and nitrification) catalyzed by different populations of microorganisms that are present, as well as the removal of pharmaceutical pollutants with higher biodegradability potential, such as ibuprofen, will occur throughout each operating cycle. Other compounds with lower biodegradability but higher potential of interacting with sludge, such as the case of galaxolide, will be retained in the sludge that is present. Operating with sludge retention times longer than conventional systems favors this contact, thus improving subsequent degradation. Likewise, the process aims to maximize nitrification-denitrification since the generation of ammonia monooxygenase (AMO) enzyme by specific bacterial groups improves the removal of some pharmaceutical pollutants, as described in the "State of the Art" section.

The addition of PAC directly in the sequential reaction unit at concentration ranges of 0.5-2 g/L allows: a) increasing the removal of pharmaceutical pollutants up to values greater than 90%, being especially significant in the case of more persistent pollutants (low biodegradability and low interaction with sludge) as they become completely eliminated; b) improving nitrification and denitrification which results in a higher production of the AMO enzyme; c) improving operation of the overall system by minimizing the problems of membrane fouling in the ultrafiltration membrane unit.

Once the operating cycle in the sequential unit is completed and the clarified effluent is obtained by settling the biomass that is present, the supernatant is partially drained out by means of a pump into the chamber containing the membrane, where an ultrafiltration membrane unit (pore size 0.04-0.4 µm) allows obtaining the final effluent of the process. The membrane operation follows a cycle comprising a suction period followed by another relaxation or backwash period taking up 80-90% and 10-20% of the operating time, respectively. Unlike the sequential reaction unit, in this second chamber an aeration stream from the lower area is maintained continuously to minimize membrane fouling. Two streams are obtained from this chamber: a) the final effluent of the process with a very low solid, organic matter and nutrient content, and with almost complete absence of pharmaceutical products, and b) a lower stream which contains a large amount of solids, and which is recirculated towards the sequential reaction unit. The purge is obtained from this recirculation stream, determining the residence time of the solids that are present (biomass and PAC), which will be between 30 and 120 days, whereas the HRT will be the usual residence time (6-24 hours) depending on the desired removal of conventional pollutants.

Unlike conventional processes, this process is designed for operating with very long SRTs, high biomass concentrations, microbial diversity, high enzymatic activity, etc., in order to maximize the removal of biodegradable and lipophilic pharmaceutical compounds and to achieve a very good quality final effluent in terms of its conventional (solids, organic matter and nutrients) and pharmaceutical pollutants levels. However, the strategy of adding PAC is key to achieve complete removal of pharmaceutical compounds, especially in relation to those persistent compounds for which the biodegradation or interaction of which with sludge is not very significant (for example, in the case of carbamazepine and diazepam, among others). Table 1 shows the efficiencies achieved in this process which are much greater than those usually indicated in conventional treatment systems.

**Table 1. Comparison between the removal efficiencies of the pharmaceutical compounds under consideration.**

| Compound | Removals in conventional systems (%) | Removals in the proposed process (%) |
|---|---|---|
| Carbamazepine | < 20 | > 99 |
| Diazepam | < 20 | 85-99 |
| Diclofenac | < 40 | 90-93 |
| Fluoxetine | 70-85 | 97-98 |
| Naproxen | > 80 | 90-93 |
| Ibuprofen | > 90 | 98-99 |
| Sulfamethoxazole | 40-70 | 97-99 |
| Roxithromycin | 65-85 | 97-99 |
| Trimethoprim | 35-75 | 90-99 |
| Erythromycin | 50-75 | 94-99 |
| Galaxolide | 50-75 | 86-93 |
| Tonalide | 50-75 | 80-87 |
| Celestolide | 50-75 | 86-97 |

### Description of the Drawing

Figure 1 complements the description and allows a better understanding of the main technical features of the invention. This scheme has an illustrative and non-limiting nature. The different units comprised by the described process are shown.

Figure 1.
1. Wastewater receiving tank
2. Sequential bioreactor
3. Unit containing ultrafiltration membrane
4. Inlet feeding of raw wastewater
5. Final effluent of treated water (permeate of the membrane unit)
6. PAC Addition
7. Recirculation pump
8. Raw wastewater feeding pump
9. Membrane unit permeate pump
10. Purge
11. Programmer-controlled automatic valve
12. Programmer
13. Air compressor
14. Valve
15. Stirrer motor
16. Stirrer blades
17. Ultrafiltration membrane unit

### Implementing Example

### Example 1

Treatment of wastewater with average characteristics of 1000 mg COD/L, 80 mg N-NH₄/L, 8 mg P-PO₄/L and a pharmaceutical compound concentration of 10 µg/L of anti-inflammatory compounds (ibuprofen, naproxen and diclofenac); 10 µg/L of antibiotics (sulfamethoxazole, trimethoprim, roxithromycin and erythromycin); 10 µg/L of antidepressant compound (fluoxetine); 20 µg/L of tranquilizer compound (diazepam) as well as anticonvulsant (carbamazepine); 40 µg/L of substances used in the formulation of cosmetics (galaxolide, tonalide and celestolide).

This wastewater is fed to the sequential biological reaction unit (useful volume of 30 L, hydraulic residence time of 1 day) where the various processes of removal occur to a greater extent. This unit operates discontinuously following a programming sequence alternating different periods throughout a complete operating cycle of 6 hours: filling (8 minutes), anoxic operation (93 minutes), aerobic operation (236 minutes), settling (15 minutes) and effluent withdrawal (8 minutes). The volume exchange ratio in this unit is 25%. The addition of 1000 mg/L of PAC (real density of 1.665 g/cm³, apparent density of 0.25 g/cm³ and specific surface area of 328 m²/g) is performed directly in this unit. Once the operating cycle ends, the effluent generated is fed to the membrane chamber. The cycle was run with an ultrafiltration flat sheet membrane unit made of polymeric material (pore size of 0.4 µm, surface area of 0.126 m², nominal flow of 20 L/m²h and permeability of 98.71 L/m²h bar). Operating with this membrane unit involves alternating suction and relaxation periods (6.25 minutes and 1.25 minutes, respectively), maintaining an air stream at all times by means of coarse bubble diffusers located in the lower portion of said chamber to create the crossflow necessary for minimizing the membrane fouling.

After operating with a solid retention time of 90-100 days (when PAC saturation in terms of pharmaceuticals starts to be observed), the characteristics of the final effluent of the process can be summarized as: 95-99% organic matter removal, 70-80% N-NH₄ removal and about 80% P-PO₄ removal. According to the removal of the pharmaceutical compounds under consideration, three groups stand out in terms of their behavior:
- Compounds with higher affinity for PAC which are not significantly eliminated in the absence of PAC: carbamazepine, trimethoprim, roxithromycin, erythromycin and fluoxetine, very high removals (97-99%) being achieved. The main characteristic that these compounds share is that all of them have a pKa between 7-10 and can therefore be moderately alkaline. Moreover, these compounds have amino groups within their molecular structures which can be partially protonated under neutral conditions. Therefore, the main mechanism of removal of these compounds in the process lies in their interaction with PAC.
- Compounds with medium biodegradability such as ibuprofen and naproxen. These compounds have high percentages of removal (> 90%), biodegradation being the main mechanism of removal, whereas adsorption in sludge or in PAC is not significant. However, the greater abundance of nitrifying organisms observed after the addition of PAC further improves their removal. The long SRT applied in the process and the development of a wide diversity of microorganisms are the main factors that would explain the removal of these substances.
- Lipophilic compounds with low affinity for PAC and intermediate biodegradability such as galaxolide, tonalide and celestolide fragrances. Their removal does not increase significantly after the addition of PAC, basically being retained by the sludge (absorption in the lipophilic layer of cell walls). Once retained, these compounds can be biodegraded. The complete biomass retention in the process due to the presence of the ultrafiltration membrane unit assures the absence of these compounds in the final effluent.

## Claims

1. A process for the removal of pharmaceutical compounds present in wastewater by means of using powdered activated carbon (PAC) in a sequential bioreactor coupled to a chamber containing ultrafiltration membranes comprising the following steps:
a) Collecting wastewater which is **characterized by** the presence of organic matter in the range of 500-2000 mg COD/L, ammonia in the range of 10-100 mg N-NH₄/L and phosphorus in the range of 1-10 mg P-PO₄/L, as well as of pharmaceutical compounds in trace concentrations: below 100 µg/L.
b) Biological treatment of wastewater in a sequential batch reactor receiving a direct feeding of powdered activated carbon for the purpose of maintaining a constant concentration in the range of 0.5-2 g PAC/L that will be achieved by means of regulating the purge flow rate and maitaining a solid retention time of 30-120 days where the operation of the sequential batch reactor involves monitoring by means of a timer with a 6-hour controlled program cycle comprising the following phases: 3-10% partial filling; 20-30% under anoxic reaction conditions,; 60-70% under aerobic reaction conditions; and 3-10% settling and partial draining,.
c) Treatment of the effluent generated after the partial draining of the sequential batch reactor in a continuous chamber having immersed therein an ultrafiltration membrane, which has a pore size of 0.04-0.4 µm and operates following a continuous routine alternating suction and relaxation periods taking up 80-90% and 10-20% of the operating time of the membrane, respectively, and a continuous aeration from the bottom, in order to minimize membrane fouling, in which two streams are produced: i) a permeate generated by the membrane constituting the final stream of the process, ii) a stream containing the reject accumulated in this chamber, a portion of which is recirculated by means of a pump into the sequential batch reactor during the aeration phase and the other portion constitutes the purge of the process.

2. The process according to claim 1 for the removal of pharmaceutical compounds present in wastewater from hospitals, pharmaceutical industries and/or farming and stock raising using medicaments for veterinary use.

## Patentansprüche

1. Verfahren zur Entfernung von im Abwasser vorliegenden pharmazeutischen Verbindungen mittels Verwendung von pulverförmiger Aktivkohle (PAK) in einem an eine Kammer mit einer Ultrafiltrationsmembran gekoppelten sequentiellen Bioreaktor, das die folgenden Schritte umfasst:
a) Sammeln von Abwasser, das durch das Vorliegen von organischem Material im Bereich von 500 bis 2000 mg COD/l, Ammoniak im Bereich von 10 bis 100 mg N-NH4/l und Phosphor im Bereich von 1 bis 10 mg P-PO₄/l sowie pharmazeutischen Verbindungen in spurenförmigen Konzentrationen von unter 100 µg/l gekennzeichnet ist.
b) biologisches Aufbereiten von Abwasser in einem sequentiellen Chargenreaktor, der eine direkte Zufuhr von pulverförmiger Aktivkohle erhält, um eine konstante Konzentration im Bereich von 0,5 bis 2 g PAC/l aufrechtzuerhalten, die durch Regulieren der Abschlämmdurchflussrate und Aufrechterhalten einer Verweilzeit der Feststoffe von 30 bis 120 Tagen erreicht wird, wobei der Betrieb des sequentiellen Chargenreaktors ein Überwachen mittels eines Zeitgebers mit einem 6-stündigen gesteuerten Programmzyklus einbezieht, der die folgenden Phasen umfasst: 3 bis 10 % partielles Füllen; 20 bis 30 % unter anoxischen Reaktionsbedingungen; 60 bis 70 % unter aeroben Reaktionsbedingungen; und 3 bis 10 % Absetzen und partielles Ablassen.
c) Aufbereiten des nach dem partiellen Ablassen des sequentiellen Chargenreaktors erzeugten Abwassers in einer kontinuierlichen Kammer, in der eine Ultrafiltrationsmembran eingetaucht ist, die eine Porengröße von 0,04 bis 0,4 µm aufweist und nach einer kontinuierlichen, routinemäßigen, abwechselnden Saug- und Relaxationszeit arbeitet, die 80 bis 90 % bzw. 10 bis 20 % der Betriebszeit der Membran einnimmt, und ein kontinuierliches Belüften von unten, um ein Verschmutzen der Membran zu minimieren, wobei zwei Ströme produziert werden: i) ein Permeat, das von der den letzten Strom des Verfahrens bildenden Membran erzeugt wird, ii) ein Strom, der den in der Kammer angesammelten Ausschuss enthält, wobei ein Teil während der Belüftungsphase mittels einer Pumpe in den sequentiellen Chargenreaktor zurückgeleitet wird und der andere Teil die Abschlämmung des Verfahrens darstellt.

2. Verfahren nach Anspruch 1 zur Entfernung von pharmazeutischen Verbindungen, die im Abwasser von Krankenhäusern, Pharmaindustrien und/oder Landwirtschaft und Viehzucht, in der Tierarzneimittel verwendet werden, vorliegen.

## Revendications

1. Procédé pour l'élimination de composés pharmaceutiques présents dans les eaux résiduelles en utilisant du charbon actif en poudre (PAC) dans un bioréacteur séquentiel couplé à une chambre contenant des membranes d'ultrafiltration comprenant les étapes suivantes :
a) La collecte des eaux résiduelles qui sont **caractérisées par** la présence de matière organique dans la plage de 500-2000 mg COD/L, d'ammoniaque dans la plage de 10-100 mg N-NH₄/L et de phosphore dans la plage de 1-10 mg P-PO₄/L, ainsi que de composés pharmaceutiques à l'état de traces : au-dessus de 100 µg/L.
b) Le traitement biologique des eaux résiduelles dans un réacteur séquentiel discontinu recevant une alimentation directe de charbon actif en poudre dans le but de maintenir une concentration constante dans la plage de 0,5-2 g PAC/L qui sera obtenue en régulant le débit de purge et en maintenant une durée de rétention solide de 30-120 jours où le fonctionnement du réacteur séquentiel discontinu implique la surveillance au moyen d'un chronomètre avec un cycle de programme contrôlé de 6 heures comprenant les phases suivantes: 3-10% de remplissage partiel ; 20-30 % dans des conditions de réaction anoxiques ; 60-70 % dans des conditions de réaction aérobies ; et 3-10 % de décantation et de drainage partiel.
c) Traitement de l'effluent généré après le drainage partiel du réacteur séquentiel discontinu dans une chambre continue ayant une membrane d'ultrafiltration immergée à l'intérieur, qui a une taille de pore de 0,04-0,4 µm et fonctionne en suivant une routine continue alternant entre des périodes d'aspiration et de relâchement prenant 80-90 % et 10 %-20 % de la durée de fonctionnement de la membrane, respectivement, et une aération continue d'en bas, afin de minimiser l'encrassement de la membrane, où deux flux sont produits : i) un perméat généré par la membrane constituant le flux final du procédé, ii) un flux contenant les rejets accumulés dans cette chambre, dont une portion est recirculée au moyen d'une pompe dans le réacteur séquentiel discontinu pendant la phase d'aération et l'autre portion constitue la purge du procédé.

2. Procédé selon la revendication 1 pour l'élimination de composés pharmaceutiques présents dans les eaux résiduelles provenant des hôpitaux, des industries pharmaceutiques et/ou de l'agriculture et de l'élevage utilisant des médicaments à usage vétérinaire.
